# EUROPÄISCHE PATENTSCHRIFT

(11) **EP 1 042 110 B1**
(45) Veröffentlichungstag und Bekanntmachung des Hinweises auf die Patenterteilung: **29.09.2004**
(21) Anmeldenummer: 98962268.3
(22) Anmeldetag: 10.11.1998
(51) Int. Cl.: B29B 15/12

(54) **VERFAHREN UND VORRICHTUNG ZUR FASERIMPRÄGNIERUNG**
METHOD AND DEVICE FOR FIBER IMPREGNATION
PROCEDE ET DISPOSITIF POUR L'IMPREGNATION DE FIBRES

(30) Priorität: 24.12.1997 DE 19757881
(43) Veröffentlichungstag der Anmeldung: 11.10.2000
(73) Patentinhaber: Harmia, Tapio, Dr., 67659 Kaiserslautern (DE); Funck, Ralph, Dr., 67661 Kaiserslautern (DE)
(72) Erfinder: Hausmann, Joachim, 67659 Kaiserslautern (DE)
(74) Vertreter: Weber, Dieter, Dr.
(86) Internationale Anmeldenummer: PCT/DE1998/003361
(87) Internationale Veröffentlichungsnummer: WO 1999/033623

(56) Entgegenhaltungen:
- WO-A-95/25000
- PATENT ABSTRACTS OF JAPAN vol. 009, no. 046 (M-360), 27. Februar 1985 & JP 59 184615 A (MITSUBISHI RAYON KK), 20. Oktober 1984
- DATABASE WPI Section Ch, Week 7817 Derwent Publications Ltd., London, GB; Class A88, AN 78-31227A XP002097026 & JP 53 028780 A (SHIKISHIMA BOSEKI) , 17. März 1978

## Beschreibung

Die vorliegende Erfindung betrifft ein Verfahren und eine Vorrichtung zur Imprägnierung von Fasermaterial, wobei unter Fasermaterial Faserbündel oder -stränge, Gewebe oder auch Fasermatten verstanden werden, wobei in letzterem Fall die einzelnen Fasern oder Filamente in Zufallsorientierung vorliegen. Das Fasermaterial kann aus unterschiedlichen Materialien bestehen, es können Glas-, Kohlenstoff- oder Aramidfasern verwendet werden, oder Naturfaser, wie z.B. Flachs, Jute, Hanf oder Baumwollefasern oder Metallfasern, wie Stahl-, Kupfer- oder Aluminiumfasern, oder Kunststoffasern, wie z.B. Polyethylen-, Polypropylen- oder Polyamid-, Polyethylenterefthalatfasern verwendet werden. Das Tränken bzw. Imprägnieren von derartigen Fasermaterialien ist ein wesentlicher Schritt bei der Herstellung von faserverstärkten Verbundwerkstoffen, bei welchen es auf einen guten Zusammenhalt zwischen einem Matrixwerkstoff und den Fasern ankommt. Dieser gute Zusammenhalt wird nur durch eine möglichst vollständige Benetzung der Oberfläche der einzelnen Fasern ermöglicht.

Insbesondere betrifft die vorliegende Erfindung ein Verfahren zum Imprägnieren von Fasermaterial, bei welchem ein Imprägniermittel in die Zwischenräume des Fasermaterials eingebracht wird und die einzelnen Fasern umhüllt und/oder durchtränkt werden, wobei das Imprägniermittel durch einen Zuführkörper mit einer oder mehreren Öffnungen zugeführt wird, an welchen das Fasermaterial in Berührung mit dem Zuführkörper oder auch im Abstand von diesem vorbeibewegt wird.

Die entsprechende Vorrichtung zum Imprägnieren von Fasermaterial, von welcher die vorliegende Erfindung ausgeht, weist einen Zuführkörper mit einer oder mehreren Öffnungen für das Imprägniermaterial sowie Transporteinrichtungen für das Fasermaterial auf, durch welche das Fasermaterial durch die Vorrichtung hindurch bzw. an den Zuführöffnungen bzw. dem Zuführkörper vorbeibewegt wird.

Ein solches Verfahren und eine entsprechende Vorrichtung sind aus der DE 38 35 574 bekannt, wobei in dieser eine Imprägniervorrichtung beschrieben wird, bei der ein Faserbündel über eine Düse geführt wird, wobei eine Kunststoffschmelze mit einem erhöhten Druck quer zur Bewegungsrichtung der Faser durch das Faserbü ndel gedrückt wird, welches somit durchtränkt wird. Dabei erfolgt die Imprägnierung im wesentlichen lokal durch Zusammenführen des Fasermaterials und einer Düse an einem Ort, wo aufgrund des Druckes des aus der Düse austretenden Imprägniermaterials das Faserbündel bzw. Fasermaterial relativ schnell von dem Imprägniermittel durchsetzt wird.

Daneben sind auch ein Verfahren und eine Vorrichtung bekannt, bei welchen die Zufuhr durch eine mit dem Fasermaterial mit gleicher Geschwindigkeit mitbewegte, durchlässige Tragefläche erfolgt. Ein solches Verfahren und eine entsprechende Vorrichtung sind aufgrund der mitzubewegenden Tragefläche und der Abstimmung der Geschwindigkeiten des Fasermaterials und der Tragefläche relativ aufwendig.

Die Verfahren und Vorrichtungen mit lokaler Zufuhr, auch wenn die lokale Zufuhr von Imprägniermateiral mehrfach an aufeinanderfolgenden Positionen wiederholt wird, haben den Nachteil, daß die Durchtränkung des Fasermaterials oft nur ungleichmäßig und nicht vollständig erfolgt. Beispielsweise kann es im Falle von Faserbündeln geschehen, daß die Faserbündel, quer zu ihrer Längsrichtung gesehen, unterschiedlich dick sind und dadurch dem in dieser Dickenrichtung hindurchtretenden Imprägniermaterial einen sehr unterschiedlichen Strömungswiderstand entgegensetzen. Das Imprägniermaterial fließt dann bevorzugt durch Bereiche mit niedrigem Strömungswiderstand, trennt dadurch die Faserbündel unter Umständen sogar auf und durchtränkt die dickeren Bündelbereiche nur schlecht.

Die WO 95/25000 zeigt eine Vorrichtung mit einem hohlzylinderförmigen Grundkörper mit einem Abschnitt mit in Längsrichtung eingebrachten Schlitzen durch die ein Imprägnierugsmittel zugeführt wird.

Die JP 5984615 zeigt eine Vorrichtung mit einem rohrförmigen Grundkörper. In diesen rohrförmigen Grundkörper ist ein sich in longitudinaler Richtung erstreckender Schlitz angeordnet. In diesen Schlitz ist ein Sinterkörper eingearbeitet, durch den Imprägniermittel zu den Fasern zugeführt wird.

Gegenüber diesem Stand der Technik liegt der vorliegenden Erfindung die Aufgabe zugrunde, ein Verfahren und eine Vorrichtung zu schaffen, welche eine vollständigere und gleichmäßigere Durchtränkung des Fasermaterials erreichen.

Hinsichtlich des Verfahrens wird diese Aufgabe dadurch gelöst, daß für die Zufuhr des Imprägniermittels ein Zuführkörper aus einem permeablen oder porösen Material verwendet wird, und das Fasermaterial während der Imprägnierung mit dem Zuführkörper in Kontakt gebracht wird.

Vorzugsweise weist der permeable bzw. poröse Zuführkörper, in Fließrichtung des imprägniermaterials gesehen, einen größeren Strömungswiderstand auf als das Fasermaterial. Es versteht sich, daß auch der Strömungswiderstand des Fasermaterials in der gleichen Richtung zu betrachten ist, in der das Imprägniermaterial durch das Fasermaterial hindurchgedrückt wird, d.h. senkrecht zu der Kontaktoberfläche des permeablen bzw. porösen Zuführkörpers.

Bevorzugt ist eine Ausgestaltung des Verfahrens, bei weichem die Zufuhr des Imprägniermittel unter mäßigem Druck, von zum Beispiel mindestens 10 und höchstens 500 bar bei thermoplastischen Imprägniermitteln, und bei 1 bis 50 bar bei duromeren Imprägniermitteln, gemessen auf der dem Fasermaterial abgewandten Seite des porösen Zuführkörpers, erfolgt.

Weiterhin ist eine Ausgestaltung des erfindungsgemäßen Verfahrens bevorzugt, bei welchem die Abmessungen des Zuführkörpers, d.h. insbesondere dessen poröse Oberfläche, über welche das Fasermaterial hinwegbewegt wird, und die Geschwindigkeit der Bewegung des zu durchtränkenden Fasermaterials so aufeinander abgestimmt werden, daß ein gegebener Punkt des Fasermaterials, der mit der Kontaktfläche des Zuführkörpers in Berührung steht, für mindestens 50 Millisekunden (ms) mit dieser Kontaktfläche in Berührung bleibt, konkret also mindestens 50 ms benötigt, um über die in Bewegungsrichtung des Fasermaterials gemessene Länge der Kontaktfläche hinweg bewegt zu werden. Mit anderen Worten, wenn sich das Fasermaterial relativ zu dem Zuführkörper mit einer Geschwindigkeit von 50 mm pro Sekunde bewegt, so müßte auch die Länge der Kontaktoberfl äche des porösen Zuführkörpers mindestens 2,5 mm betragen, beträgt die Geschwindigkeit des Fasermaterials 500 mm pro Sekunde, so müßte die entsprechende Länge des Zuführkörpers 25 mm betragen.

Mit Hilfe des erfindungsgemäßen Verfahrens können problemlos duromere Imprägniermittel auf Fasern aufgebracht werden, die dann nach dem Imprägnieren der Fasern ausgehärtet werden. Überraschenderweise hat sich jedoch gezeigt, daß auch thermoplastische Materialien, welche im Vergleich zu Duromeren eine wesentlich größere Viskosität haben, durch permeable bzw. poröse Zuführkörper, die relativ kleine freie effektive Querschnitte ihrer Zufuhröffnungen haben und möglicherweise auch relativ lange Zufuhrkan äle haben, sehr gut mit Hilfe des erfindungsgemäßen Verfahrens auf die zu imprägnierenden Fasern aufgebracht werden können. Dabei hat sich überdies herausgestellt, daß die Geschwindigkeit, mit welcher das Fasermaterial sich relativ zu dem Zuführkörper bewegen kann, noch erheblich über die bereits genannten Zahlen hinaus gesteigert werden kann, da in vielen Fällen schon eine Kontaktzeit von 10 Millisekunden ausreicht, um das zu imprägnierende bzw. zu durchtränkende Fasermaterial ausreichend zu benetzen. Der Zufuhrkörper kann entweder entsprechend verkürzt werden oder aber die Zufuhrgeschwindigkeit des Fasermaterials kann entsprechend erhöht werden, zum Beispiel auf 1 - 5 m pro Sekunde.

Eine besondere Anwendung des erfindungsgem äßen Verfahrens erschließt sich in Verbindung mit dem Aufbringen der imprägnierten Fasern auf Vorformen. Diese können z. B. stab- oder rohrförmig sein und die Fasern können entweder in Längsrichtung einer solchen Vorform auf diese aufgebracht werden oder aber um diese herum gewickelt werden, unter einem Winkel, der im Prinzip zwischen 0° (entsprechend Längsrichtung) und 90° (entsprechend einer Umwicklung in einer Ebene senkrecht zur Vorschubrichtung der Vorform) gewählt werden kann.

Dabei kann entweder die Vorform gedreht werden oder aber die Zufuhreinrichtung für die Fasern wird gemeinsam mit einer entsprechenden Imprägniereinrichtung um die Vorform herum gedreht, je nachdem welche Variante sich als praktisch günstiger erweist. Insbesondere wenn die Vorformen, zum Beispiel als relativ lange Rohrleitungen eine sehr große Länge haben, so ist es oftmals zweckmäßig, die Imprägnier- und Faserzufuhreinrichtungen drehbar um die Vorform anzuordnen, wenn diese mit imprägniertem Fasermaterial umwickelt werden soll. Bei kürzeren Vorformen, wie zum Beispiel kurzen Rohrabschnitten oder Quadern, ist möglicherweise die umgekehrte Vorgehensweise des Drehens der Vorform zweckmäßiger.

Bei anderen Varianten des erfindungsgemäßen Verfahrens wird das Fasermaterial durch das Innere eines von außen mit dem Imprägniermittel beaufschlagbaren Hohlkörpers geführt, wobei der Hohlkörper aus dem erwähnten porösen bzw. permeablen Material besteht.

Dabei können die Fasern mehrstufig durch mehrere aufeinanderfolgende Hohlkörper hindurchgeführt werden, wobei auch an jedem Hohlkörper auf die bereits vorhandene, imprägnierte Faserschicht eine weitere neue Faserschicht aufgebracht und zugeführt werden kann, die beim Durchführen durch den jeweils nächsten Hohlkörper imprägniert wird.

Beim Wickeln können insbesondere auch mehrere verschiedene Fasergruppen gleichzeitig auf eine Vorform aufgewickelt werden, wobei durch diese Vorgehensweise entweder eine größere Wickelbreite erreicht wird, so daß die Vorschubgeschwindigkeit der Vorform erhöht werden kann, oder aber mehrere Lagen von Fasern unmittelbar nachfolgend aufeinandergewickelt werden. Es versteht sich, daß die Fasergruppen dabei auch jeweils verschiedene Fasermaterialien aufweisen können.

Einer Wickel- bzw. Aufbringvorrichtung schließt sich zweckmäßigerweise eine entsprechende Einrichtung an, die im Falle von duromerem Imprägniermittel im allgemeinen eine Heizeinrichtung, eine Bestrahlungseinrichtung oder dergleichen zum Aushärten des duromeren Materials sein kann, während im Falle eines thermoplastischen Materials lediglich ein Abstreifen, Nachformen und Abkühlen erfolgt.

Hinsichtlich der Vorrichtung wird die der Erfindung zugrunde liegende Aufgabe dadurch gelöst, daß der Zuführkörper aus einem im wesentlichen homogenen, porösen bzw. permeablen Körper besteht, wobei der poröse Körper dafür vorgesehen ist, daß er mit dem Fasermaterial während der Imprägnierung in Kontakt tritt. Vorzugsweise ist der Strömungswiderstand des Zuführkörpers für das Imprägniermaterial größer ist als der Strömungswiderstand des Fasermaterials senkrecht zur Kontaktoberfläche des Zuführkörpers. Unter einem im wesentlichen homogenen, porösen bzw. permeablen Körper wird dabei ein Zuführkörper verstanden, dessen Material durchgehend, d.h. jeweils bei

Betrachtung von Bereichen, die deutlich größer sind als die Poren oder Öffnungen des Materials, die gleichen chemischen und physikalischen Eigenschaften hat. Zweckmäßigerweise sollten die Öffnungen oder Porengrößen in dem Material des Zuführkörpers ebenfalls möglichst homogen verteilt und gleich groß sein, d.h. die Größenverteilung der einzelnen Poren sollte nur eine geringe Schwankungsbreite aufweisen. Außerdem sollte ein solches poröses Material selbstverständlich offenporig sein, damit die gewünschte Durchlässigkeit gegeben ist. Zum Beispiel kann der Zuführkörper aus einem Sintermaterial bestehen, welches durch Zusammensintern eines Granulates, vorzugsweise mit einer Korngröße von weniger als 1 mm, hergestellt wird. Die mittlere Öffnungsgröße der einzelnen Poren sollte vorzugsweise 0,2 mm im Durchmesser nicht übersteigen, wobei dieses gegebenenfalls auch die Verwendung eines entsprechend feinkö rnigeren Sintermaterials erfordert.

Statt aus einem porösen Material oder Sintermaterial könnte der permeable bzw. poröse Zuführkörper zum Beispiel auch aus mehreren Lagen eines ausreichend dichten Gewebes oder Netzes bestehen, welches vorzugsweise aus Einzelfilamenten hergestellt ist, die zweckmäßigerweise von dem Imprägniermaterial nur schlecht benetzbar sind. Ebenso könnte eine Lochplatte oder dergleichen vorgesehen sein. Eine derartige Lochplatte könnte durch viele feine Bohrungen in einem Material, wie Metall, Keramik oder Kunststoff, realisiert werden. Dabei liegt der Durchmesser der Bohrung vorzugsweise zwischen 1 und 5000 µm, bevorzzugt zwischen 10 und 1000 µm und ihr Abstand zueinander liegt bei 1 - 1000 µm. Das bevorzugte Längen- zu Durchmesserverhältnis der Bohrungen liegt zwischen 0,05 - 2000, vorzugsweise zwischen 0,1 und 1000, insbesondere zwischen 0,5 und 100.

Außerdem sollte der Zuführkörper vorzugsweise aus einem Material bestehen, an welchem das Imprägniermittel nur schlecht haftet oder welches gegen Lösungsmittel für das Imprägniermaterial chemisch beständig ist.

Zweckmäßig kann es außerdem sein, wenn die Kontaktoberfl äche des Zuführkörpers bewußt als Oberfläche mit geringer Gleitreibung für das Fasermaterial ausgestaltet wird. Zum Beispiel könnte die Oberfläche des porösen Körpers, die mit dem Fasermaterial in Kontakt tritt, poliert sein. Wahlweise könnte diese Oberfläche auch mit einem geeigneten Gleitmaterial beschichtet und zum Beispiel galvanisiert sein, um die Reibung zwischen dem Fasermaterial und der Oberfläche des porösen Zuführkörpers zu verringern. In vielen Fällen gewährleisten jedoch auch die mehr oder weniger abrasiven Fasermaterialien, daß eine anfänglich rauhe Oberfläche eines Sinterkörpers oder sonstigen permeablen Körpers nach relativ kurzer Zeit "eingeschliffen" bzw. poliert wird.

Die Dicke des porösen Zuführkörpers sollte groß sein gegen die Dicke des zu durchtränkenden Fasermaterials und mindestens das Doppelte der letzteren Dicke betragen, jeweils gemessen in Strömungsrichtung des Imprägniermaterials, damit der wesentliche Druckabfall entlang des porösen Körpers auftritt, und die Benetzungsfront in dem Fasermaterial möglichst gleichmäßig durch die Dicke des Fasermaterials fortschreitet, auch wenn die Fasern in dem Fasermaterial unterschiedlich dicht angeordnet sind.

Die entsprechende Vorrichtung weist im einzelnen die Einrichtungen auf, die zur Durchführung der oben erwähnten Verfahrensschritte notwendig sind. Eine der Varianten der erfindungsgemäßen Vorrichtung besteht in der Ausgestaltung eines porösen bzw. permeablen Zufuhrkörpers als Hohlkörper, wobei die Fasern durch das Innere dieses Hohlkörpers hindurchgefü hrt werden und der Hohkörper von außen mit Imprägniermittel beaufschlagt wird, welches die Wand des Hohlkörpers nach innen hindurchdringt. Zweckmäßigerweise ist der Einlaufbereich eines solchen, im wesentlichen zylindrischen oder auch anderweitig profilierten Hohlkörpers mit einem in Faserlaufrichtung konvexen, d.h. mehr oder weniger trichterförmigen oder trompetenförmigen Einlaufbereich ausgestaltet.

Zum Aufbringen des Fasermaterials auf eine Vorform ist in einer bevorzugten Variante der Erfindung eine Halterung für die Vorform vorgesehen, welche relativ zu einer Imprägniereinrichtung entlang einer Achse bewegbar ist. Dabei können die imprägnierten Fasern in Längsrichtung auf die Vorform aufgebracht werden. Wenn die Vorform gleichzeitig gedreht wird, wofür in einer entsprechenden Ausführungsform eine entsprechende Dreheinrichtung vorgesehen ist, werden die Fasern auf die Vorform aufgewickelt, und zwar unter einem Winkel relativ zu der Vorschubrichtung der Vorform, dessen Tangens dem Verhältnis der Drehgeschwindigkeit am Umfang der Vorform zu der Vorschubgeschwindigkeit entspricht und der damit im wesentlichen zwischen 0° und 90° einstellbar ist. Anstatt die Vorform zu drehen, was unter Umständen bei sehr langen Vorformen, die im Prinzip als Endlosmaterial hergestellt werden, Schwierigkeiten bereiten könnte, kann auch eine Wickelvorrichtung vorgesehen sein, bei welcher eine Faserzufuhreinrichtung zusammen mit der entsprechenden Imprägniereinrichtung um die Vorform herum drehbar angeordnet ist.

Es können auch mehrere Faserzufuhreinrichtungen unabh ängig voneinander oder gemeinsam miteinander um die Vorform drehbar vorgesehen sein. Unabhängig drehbare Faserzufuhreinrichtungen erlauben es, verschiedene Lagen von Fasern unter unterschiedlichen Winkeln relativ zur Vorschubrichtung auf die Vorform aufzubringen. Mehrere Faserzufuhreinrichtungen können jeweils eine eigene Imprägniereinrichtung haben, die gemeinsam mit der Zufuhreinrichtung drehbar ist, gegebenenfalls kann jedoch auch eine gemeinsame Imprägniereinrichtung vorgesehen werden, wenn die Faserzufuhreinrichtungen sich gemeinsam drehen und auch die Imprägniervorrichtung entsprechend drehbar vorgesehen ist.

In der bevorzugten Ausführungsform ist der poröse bzw. permeable Körper ein Sintermaterial, hergestellt aus einem Sinterpulver mit Korngrößen im Bereich zwischen 0,1 und 1000 µm, vorzugsweise im Bereich zwischen 10 und 500 µ. Die Dicke eines solchen porösen Sinterkörpers sollte in der bevorzugten Ausführungsform der Erfindung mindestens 1 mm, besser 2 und besonders bevorzugt mehr als 5 mm betragen. Daraus ergeben sich effektive Zufuhrkanäle durch den porösen Sinterkö rper, deren Länge zu Durchmesserverhältnis (wobei hier ein mittlerer Durchmesser der Kanäle zugrunde gelegt wird) in der Größenordnung von 10 bis 1000 liegt. Das genaue Verhältnis von Länge zu Durchmesser und auch des absoluten mittleren Durchmessers der Zufuhrkan äle hängt sehr stark von dem verwendeten Imprägniermittel ab, wobei sehr zähflüssige Materialien tendentiell einen größeren freien Zuführquerschnitt durch die einzelnen Kanäle bilden. Insbesondere könnte ein permeabler Körper auch zum Beispiel dadurch hergestellt werden, daß eine entsprechende metallische Platte oder sonstwie geformter Zuführkörper mit Hilfe eines Lasers mit sehr feinen Bohrungen von weniger als 1 mm Durchmesser versehen wird, zum Beispiel mit Bohrungen von 0,2 bis 0,5 mm Durchmesser. Es könnten auch mehrere Netze, Gitter oder Gewebe aus Metall oder anderen Materialien als poröse, permeable Zuführkörper verwendet werden.

Überraschenderweise hat sich herausgestellt, daß poröse Sinterkörper, die aus Sinterkorn mit einem mittleren Durchmesser von weniger als 500 µm hergestellt werden, sogar für die Imprägnierung mit thermoplastischen Materialien hervorragend geeignet sind, auch wenn die effektiven Zufuhrkanäle ein Länge-zu-Durchmesser-Verhältnis in der Größenordnung von 100 haben. Dies liegt unter anderem vermutlich daran, daß diese hochviskosen, thermoplastischen Materialien im Regelfall sogenannte nicht-Newton'sche Flüssigkeiten sind, d.h. ihre Viskosität veränder sich mit den jeweiligen Strömungsbedingungen und kann bei hohen Relativgeschwindigkeiten auch abnehmen.

Nach dem Grundgedanken der Erfindung wird ein Fasermaterial, d.h. ein oder mehrere Faserbündel bzw. ein Gewebe oder auch eine Fasermatte, über ein permeables oder poröses Material bzw. einen permeablen oder porösen Körper geführt. Die Fasern und der poröse Körper stehen miteinander in Kontakt, wobei dies entweder durch Anlage eines Gegenkörpers, zum Beispiel einer Andruckwalze oder eines Andruckschuhes, oder aber durch Erzeugen einer entsprechenden Spannung in dem Fasermaterial und durch geeignete Formgebung des porösen Körpers und eine angepaßte Führung des Fasermaterials erreicht werden kann. Durch den porösen Körper wird ein Fluid bzw. eine Schmelze hindurch gefördert. Auf der Austrittsseite der Schmelze bzw. des Fluids, wo das Fasermaterial mit dem porösen Körper in Kontakt steht, dringt die Schmelze bzw. das Fluid unmittelbar in das Fasermaterial ein und es findet eine Durchtränkung statt. Im Gegensatz zum Stand der Technik findet hier die Durchtränkung bzw. Imprägnierung kontinuierlich während der gesamten Laufzeit des Materials über die Oberfläche des porösen Körpers hinweg statt. Gleichzeitig findet auch eine Relativbewegung zwischen dem Fasermaterial und dem porösen Körper statt. Das erfindungsgemäße Verfahren und die entsprechende Vorrichtung eignen sich nicht nur für niedrig viskose Fluide oder Schmelzen, sondern können auch für höher viskose Materialien passend ausgestaltet werden, indem zum Beispiel der Zuführdruck erhöht wird und/oder Durchlässigkeit und erforderlichenfalls die Porengröße des porösen bzw. permeablen Körpers vergrößert wird. Bei der Funktionsweise der vorliegenden Erfindung scheint sich insbesondere die relativ lange Kontaktzeit des unter einem leichten Druck kontinuierlich austretenden Fluids bzw. der Schmelze und dem Fasermaterial günstig auszuwirken, welches auf diese Weise sehr gleichmäßig durchtränkt werden kann.

Es versteht sich, daß verschiedene Merkmale der genannten und noch zu beschreibenden Ausführungsformen voneinander unabhä ngig sind und auch bei Verfahren und Vorrichtung ohne Verwendung eines Zuführkörpers mit einer großen Anzahl kleiner Öffnungen anwendbar sind. Dies gilt zum Beispiel für die später noch genauer zu beschreibenden Wickelvorrichtungen, die Zuführung von Imprägniermittel in einem Hohlkörper von außen nach innen und andere Merkmale, die für den Fachmann als von dem speziellen Zuführkörper unabhängig erkennbar sind.
Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: schematisch einen Längsschnitt durch einem porösen Körper und ein darüber hinweggefü hrtes Fasermaterial,
- Figur 2: eine Querschnittansicht des porösen Körpers gemäß der Erfindung,
- Figur 3: eine Schnittansicht durch eine zylindrische Zuführtrommel mit darüber hinweggeführtem Fasermaterial
- Figur 4: eine alternative Ausgestaltung einer erfindungsgemä ßen Vorrichtung mit Andruckelementen,
- Figuren 5 bis 7: eine weitere Ausführungsform eines im wesentlichen zylindrischen Zuführkörpers in verschiedenen Ansichten,
- Figur 8: eine doppelte Imprägniervorrichtung mit einer anschließenden Wickelvorrichtung,
- Figur 9: eine Ausfü hrungsform ähnlich Figur 8, jedoch mit einer einfachen Imprägniereinrichtung und einer Bestrahlungseinrichtung 8,
- Figur 10: schematisch das Herstellungsverfahren der sogenannten Pultrusion,
- Figur 11: einen Ausschnitt aus einer Imprägniervorrichtung ähnlich Figur 7,
- Figur 12: einen Schnitt durch das in Figur 10 mit 16 bezeichnete Pultrusionswerkzeug,
- Figur 13: ein ähnliches Pultrusionswerkzeug im Längsschnitt,
- Figur 14: eine Wickelvorrichtung in einer Seitenansicht mit drei Fasergruppen und getrennten Imprägniereinrichtungen und
- Figur 15: eine Wickelvorrichtung im Querschnitt mit drei Fasergruppen und getrennten Imprägniereinrichtungen und
- Figur 16: eine Ausführungsform ähnlich der Figuren 14 und 15, jedoch mit einer gemeinsamen Imprägniereinrichtung für alle drei Fasergruppen.

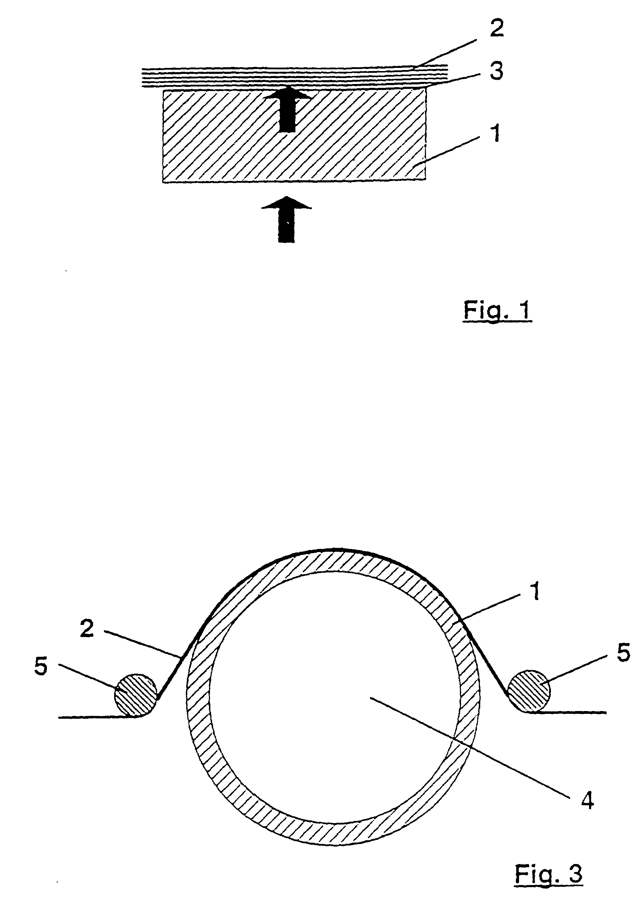

Man erkennt in Figur 1 schematisch in einem Längsschnitt einen porösen Imprägnierkörper 1 und ein über den porösen Körper 1 hinweggeführtes Fasermaterial 2. Dabei gleitet das Fasermaterial 2 entlang der Kontaktoberfläche 3 auf dem porösen Grundkörper entlang. Diese Kontaktoberfläche 3 kann speziell für die darauf gleitenden Fasern ausgebildet sein, d.h. sie kann insbesondere poliert oder beschichtet sein, um ein Aufreißen oder Hängenbleiben der einzelnen Fasern an den einzelnen Öffnungen oder Poren zu vermeiden. Die Kontaktoberfl äche kann aber auch unbehandelt bleiben, insbesondere wenn relativ harte, abrasive Fasern verwendet werden, die schon nach sehr kurzem Hinweggleiten über eine entsprechende Kontaktoberfläche dieselbe einschleifen und glätten. Der poröse Körper 1 ist vorzugsweise ein Sinterkörper, d.h. er ist vorzugsweise aus einem feinkörnigen Granulat zu einem massiven Teil zusammengesintert.

Durch schwarze Pfeile wird die Strömungsrichtung eines Fluids, zum Beispiel einer Polymerschmelze, angedeutet, welche von unten her den porösen Körper 1 durchdringt und dann entlang der Kontaktfläche 3 in das Fasermaterial 2 eindringt. Unter der Annahme, daß das Fasermaterial 2 sich in Figur 1 von links nach rechts fortbewegt, würde im linken Bereich der Figur 1, der zum Beispiel dem Beginn des porösen Körpers 1 entspricht, zunächst nur die unterste Schicht von Fasern aus dem Fasermaterial 2 von dem Imprägniermittel erfaßt und durchtränkt, wobei die Eindringfront der Schmelze oder sonstigen Imprägnierfluids mit der Zeit immer weiter in Richtung der Pfeile fortschreitet, wobei sich gleichzeitig auch das Fasermaterial nach rechts bewegt, so daß im Ergebnis die Durchdringungsfront von links nach rechts ansteigt und schließlich das gesamte Fasermaterial 2 erfaßt hat.

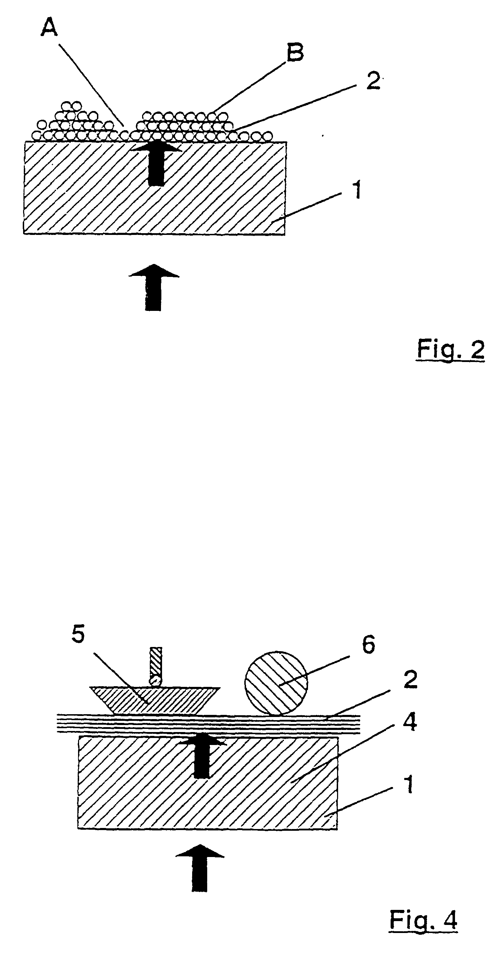

Figur 2 zeigt einen Querschnitt durch ein auf einem porösen Körper 1 geführtes Fasermaterial 2 aus mehr oder weniger parallelen Fasern. Wie man erkennt, sind die Fasern im Bereich B höher und zu einer dickeren Schicht gepackt als im Bereich A. Die Durchdringung des Fasermaterials 2 mit von unten durch den porösen Körper eindringendem Imprägniermittel erfolgt dennoch sehr gleichmäßig, insbesondere wenn der durch den porösen Körper 1 bereitgestellte Strömungswiderstand deutlich größer ist als der Strömungswiderstand, den das Faserbündel, und auch insbesondere dessen dickerer Bereich B bietet.

Figur 3 zeigt eine bevorzugte Ausführungsform der vorliegenden Erfindung mit einem zylindrischen, porösen Körper 1, der einen zylindrischen Hohlraum aufweist, welcher mit einer unter Überdruck stehenden Schmelze oder sonstigen Imprägnierflüssigkeit 4 gefüllt ist.

Durch die Führung eines Fasermaterials 2 mit Hilfe von Führungselementen in Form einer Rolle oder Walze 7 über einen Abschnitt der zylindrischen Oberfläche des porösen Körpers 1 erreicht man zum einen eine relativ lange Anlagestrecke, eine entsprechend große Verweildauer des Fasermaterials in Kontakt mit dem nachgelieferten Imprägniermittel und eine Anlage des Fasermaterials an der Oberfläche des porösen Körpers 1 unter einer, vorzugsweise einstellbaren, Spannung des Fasermaterials.

Durch die Relativbewegung und das gleichmäßige, großflächige Nachströmen der Flüssigkeit wird dieses Material zwischen den Fasern sowohl in Längs- als auch in Querrichtung sehr gleichmäßig und homogen verteilt und die Fasern werden hierdurch vollständig benetzt.

Wahlweise kann der hohlzylindrische Körper 1 auch um seine zentrale Achse drehbar vorgesehen sein, auch entgegen der Laufrichtung der Fasern, um unabhängig von der Verweildauer des Fasermaterials 2 auf dem sich über 180° erstreckenden, zylindrischen Bogen die Relativgeschwindigkeit zwischen der Oberfläche des zylindrischen, porösen Körpers 1 und dem Fasermaterial 2 unabhängig einstellen zu können, um eine optimale Durchdringung zu erzielen.

Figur 4 zeigt schematisch Alternativen oder Ergänzungen zu der Ausführungsform gemäß Figur 3. Während in Figur 3 das Fasermaterial 2 aufgrund seiner Eigenspannung oder aufgebrachten Spannung fest an der Oberfläche des zylindrischen, porösen Körpers 1 anliegt, wozu auch die Rolle oder Walze 7 und gegebenenfalls eine Aufwickelvorrichtung an einem Ende und eine Bremseinrichtung für das Fasermaterial 2 an dem anderen Ende vorgesehen sein können, die jedoch in Figur 3 nicht dargestellt sind, sieht die Ausführungform gemäß 4 alternativ einen Andrückschuh 5 und/oder eine Andrückwalze 6 vor. Andrückschuh 5 und Andrückwalze 6 sind vorzugsweise elastisch federnd und in Richtung auf das Fasermaterial 2 vorgespannt gelagert. Auf diese Weise vermeidet man, daß ein erheblicher Teil des Imprägniermittels durch Abheben des Fasermaterials 2 von der Oberfläche des porösen Körpers 1 seitlich herausquillt und ungenutzt bleibt. Der hier nur schematisch wiedergegebene poröse Körper 1 kann sowohl eine ebene Oberfläche aufweisen als auch eine zylindrisch gekrümmte Oberfläche aufweisen, wie im Ausführungsbeispiel der Figur 3, wobei ein Andruckschuh 5 gegebenenfalls der entsprechenden Krümmung der Zylinderoberfläche, gegebenenfalls mit einem geringfügig größerem Radius, anzupassen wäre.

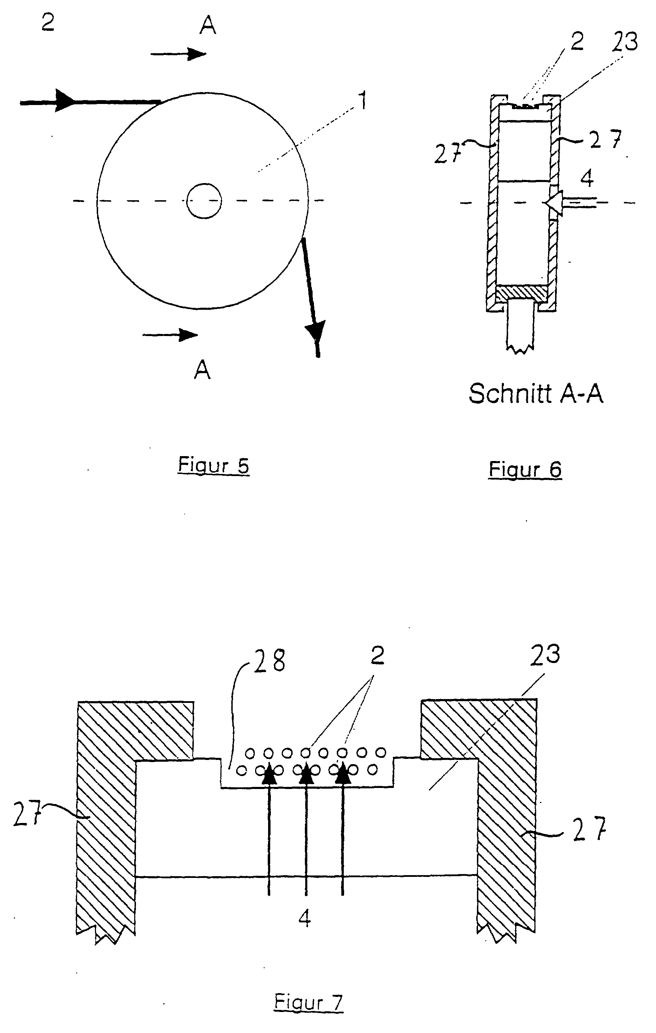

In Figur 5 erkennt man in der Seitenansicht wiederum einen im wesentlichen zylindrischen Zuführkörper 51, welchem ein Strang aus Fasermaterial 2 zugeführt wird. Dabei ist zu beachten, daß das Fasermaterial 2 gleitend über die Oberfläche des zylindrischen Zuführkörpers 51 hinweg bewegt wird, der im Schnitt einen Aufbau hat, wie er in Figur 6 erkennbar ist. Konkret besteht der Zuführkörper 51 aus einem Ring 23 aus einem porösen bzw. permeablen Material, im vorliegenden Fall aus einem Sintermaterial, wobei dieser Ring von zwei Endflanschen 27 umschlossen wird, die auch den Umfang des Ringes 23 in der Nähe seiner Stirnseiten umgreifen. In Figur 7 ist ein Ausschnitt aus Figur 6 nochmals im Detail dargestellt. Man erkennt, daß der Ring 23 noch eine umlaufende Führungsnut 28 für die Aufnahme und Führung eines Fasermaterials 2 hat. Das Imprägniermittel 4 wird, wie man auch in Figur 7 erkennt, zentral durch einen der Flansche 27 und in das Innere des von dem Ring 23 und den Flanschen 27 umschlossenen Hohlraumes hineingepumpt, und zwar unter einem Druck, der je nach dem verwendeten Imprägniermittel in weiten Bereichen zwischen wenigen bar und mehreren hundert bar variieren kann. Das Imprägniermittel aus dem Hohlraum durchdringt den porösen Körper 23 und wird aufgrund der Relativbewegung zwischen dem Fasermaterial 2 und der Oberfläche des Ringes 23 unmittelbar von den Austritts öffnungen auf der Außenfläche des Ringes 23 abgestreift und durchnetzt auf diese Weise in sehr effektiver Weise das Fasermaterial 2. Dabei hat sich herausgestellt, daß im Falle der Verwendung von Sintermaterial für den porösen Ring 23 ohne Oberflächenbehandlung zwar dessen Oberfläche zunächst relativ rauh ist und das Fasermaterial 2 unter Umstä nden beschä digt, jedoch wird die Oberfläche dieses porösen Sinterkö rpers 23 nach relativ kurzer Zeit allein durch das Fasermaterial 2 geglättet, insbesondere wenn sie aus einem harten, relativ abrasivem Material bestehen, wie zum Beispiel Glasfasern oder auch Kohlenstoffasern. Die Oberfläche des Ringes 23, soweit sie mit dem Fasermaterial 2 in Berührung kommt, ist dann in kurzer Zeit so poliert, daß eine Beschädigung der Fasern nicht mehr auftritt, diese aber nach wie vor in sehr effektiver Weise auch bei relativ kurzen Kontaktzeiten und hohen Relativgeschwindigkeiten zwischen Fasern und Ring 23 gut benetzt werden.

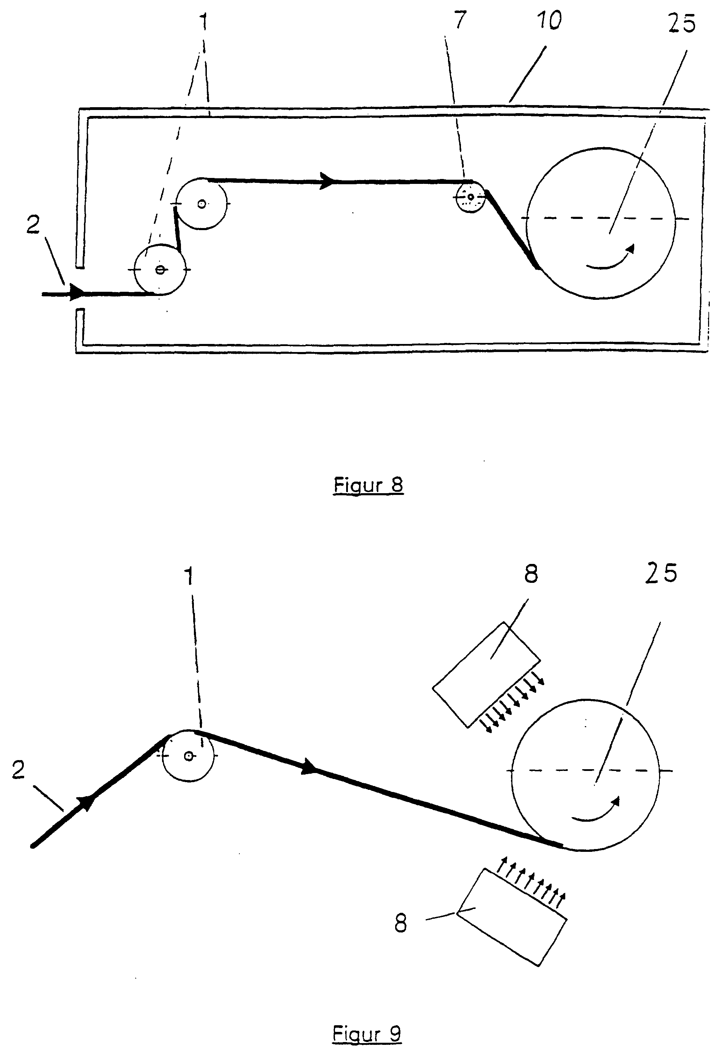

In Figur 8 sind zwei derartige Imprägnierkörper 1 in Form von Ringen 23 dargestellt, über welche das zu imprägnierende Fasermaterial 2 S-förmig hinweggeführt wird, um eine besonders effektive Benetzung von beiden Seiten des Faserstranges her zu erhalten. Eine solche Variante ist insbesondere dann zweckmäßig, wenn das Fasermaterial 2 relativ dick ist und möglicherweise von einer Seite her nicht genügend schnell durchtränkt werden kann. Das Fasermaterial 2 wird nach dem Imprägnieren über eine Rolle oder Walze 7 geführt, und von dort auf eine rotierende, zylindrische Vorform 25 gelenkt. Dabei kann entweder die Führungsrolle 7 zusammen mit oder ohne den Imprägnierkörper in axialer Richtung bewegbar sein, um unterschiedliche Abschnitte der Vorform 25 zu überstreichen, stattdessen kann jedoch auch die Vorform 25 in ihrer Längsrichtung an der Zuführrolle 7 vorbei bewegbar sein. Die gesamte Einrichtung ist in einem heizbaren Gehäuse 10 angeordnet, um ein thermoplastisches Zuführmaterial während des Imprägnierens und auch noch während des Aufwickelns auf die Form genügend flüssig bzw. plastisch verformbar zu halten.

In Figur 9 ist nur ein einzelner Imprägnierkörper 1 vorgesehen, über dessen Oberfläche ein Fasermaterial 2 zum Imprägnieren hinweggefü hrt wird. Es versteht sich, daß die in den Figuren im allgemeinen zylindrisch dargestellten Zuführkörper nicht notwendigerweise einen zylindrischen Querschnitt haben müssen, da das Fasermaterial immer nur über einen begrenzten Umfangsabschnitt dieser Zylinder hinweggef ührt wird, jedenfalls wenn die Zylinder insbesondere nicht drehbar vorgesehen sind. Allerdings könnte man nach dem Verschleiß einiger Oberflächenabschnitte die Zuführzylinder jeweils so weit drehen, daß eine neue, noch nicht verschlissene Oberfläche des zylindrischen Zuführkörpers 1 mit dem Fasermaterial 2 in Kontakt tritt.

Bei der Ausführungsform gemäß Figur 9 sind außerdem noch zwei Strahler 8 vorgesehen, durch welche die Oberfläche der bewickelten Vorform bestrahlt wird, dabei kann es sich um UV-Bestrahlung oder auch um Wärmestrahlung handeln, durch welche zum Beispiel ein duromeres Imprägniermittel nach dem Aufwickeln auf die Vorform 25 ausgehärtet wird oder ein thermoplastisches Imprägniermittel flüssig bzw. plastisch vorformbar gehalten wird. Die Heiz- bzw. Bestrahlungseinrichtungen 8 können gegenüber dem gerade aufgewickelten Strangabschnitt in axialer Richtung versetzt sein.

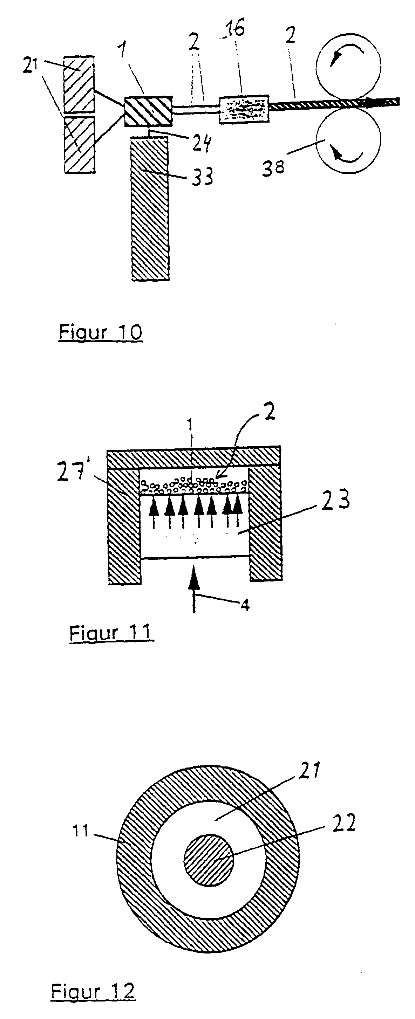

In Figur 10 sind schematisch ein Verfahren und eine Vorrichtung dargestellt, die in der Fachwelt mit Pultrusion bzw. Pultrusionsvorrichtung bezeichnet werden. Die entsprechende Vorrichtung besteht aus einer Faserzuführeinrichtung 21, einer Imprägniereinrichtung 1, einem Vorrat an Imprägniermittel 33, welches über eine Leitung 24 der Imprägniervorrichtung 1 zugeführt wird, einem Konsolidierungs- und/oder Formungswerkzeug 16, auch als Pultrusionswerkzeug bezeichnet, und einer Zugvorrichtung 38 in Form von zwei Rollen oder Walzen, durch welche das imprägnierte und geformte Fasermaterial 2 hindurchgezogen wird. Es versteht sich, daß die Imprägniervorrichtung S1 auch unmittelbar mit dem Formungswerkzeug 16 verbunden werden kann.

Die Imprägniervorrichtung 1 ist beispielhaft in Figur 11 dargestellt. Ein Zuführkörper 23' kann ähnlich ringförmig mit Flanschen 27' aufgebaut sein wie zum Beispiel im Falle der in den Figuren 5 bis 9 dargestellten Variante, kann aber auch eine abweichende Form haben.

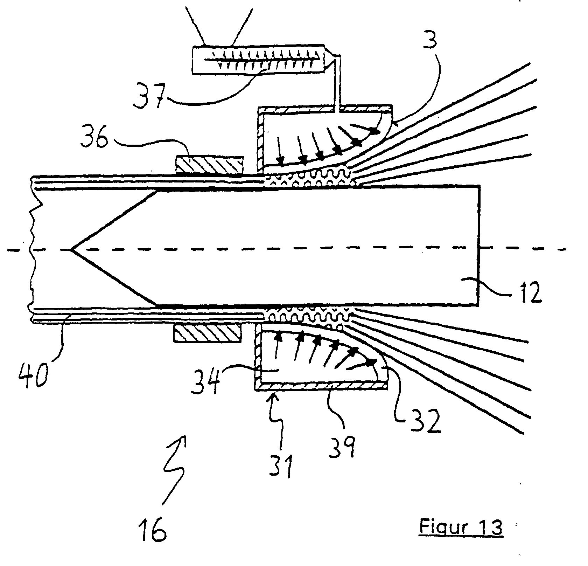

Das imprägnierte Fasermaterial 2 wird anschließend durch das Pultrusionswerkzeug 16 hindurchgeführt, dessen Querschnitt beispielhaft in Figur 12 dargestellt ist. Es versteht sich, daß der Kern 22 eine aus dem äußeren Zylinder 11 herauszuführende Halterung aufweisen muß, die sich entweder axial durch den gesamten Kern des Materials 2 und auch durch die Imprägniervorrichtung 1 hindurch erstreckt, oder aber seitlich aus dem Material 2 herausgeführt wird, wobei am Eingang des Pultrusionswerkzeuges 16 zusätzliche Führungseinrichtungen vorgesehen werden können, welche die Fasern des Materials 2 auf eine gleichmäßige Verteilung um den Kern 22 herum zwingen. Es versteht sich, daß der Innenquerschnitt des Zylinders 11 und auch der Außenquerschnitt des Kernes 22 nicht notwendigerweise kreisförmig sein müssen und daß man auf diese Weise dem imprägnierten Faserbündel, welches durch den Zwischenraum 12 zwischen Kern 22 und Mantel 11 verläuft, eine entsprechende Querschnittsform mitgegeben werden kann. Das entsprechend geformte Fasermaterial 2 wird durch ein Zugwerkzeug in Form zweier Walzen 38 geführt, deren Außenflä che selbstverstä ndlich ebenfalls dem Außenquerschnitt des geformten Fasermateriales 2 angepaßt werden kann.

In Figur 13 erkennt man im Längsschnitt ein Pultrusionswerkzeug 16', welches einen hohlen, ringförmigen Zuführkörper 31 aufweist, dessen poröse Innenwand 32 auf der Einlaufseite konvex gewölbt ist und somit in diesem Einlaufbereich eine Trichter- bzw. Trömpetenform hat. Eine im Querschnitt L-förmige Außenwand 39 schließt einen Hohlraum 34 für die Aufnahme eines Imprägniermittels bzw. einer Schmelze nach außen dicht ab. Eine Zufuhrleitung bzw. ein Extruder 37 versorgt den Hohlraum 34 mit unter Druck stehendem Imprägniermittel, das durch die in der porösen Innenwand 32 ausgebildeten Zuführkanäle in Richtung der äußeren Oberfläche 3 dieser Wand 32 gepreßt wird und dort von den Fasern eines Fasermaterials 2 aufgenommen wird. Das Fasermaterial 2 verläuft von außen kommend konvergent in die Einlaufseite des Zufuhrkörpers 31 und an dessen konvex gewölbter Innenfläche 3 entlang. Durch das Innere des Zuführringes 31 erstreckt sich zentral ein Kern oder Dorn 22, so daß das Fasermaterial 2 zwischen dessen Außenfläche und der Oberfläche der Innenwand 32 des Ringes 31 in engem Kontakt mit dieser Oberfläche laufen muß. Ein an den Zuführring 31 anschließender Kalibrierring 36 glättet die Außenfläche des mit Schmelze bzw. Imprägniermittel durchtränkten Fasermaterials 2, so daß auf der linken Seite jenseits des Kernes 22 das durchtränkte Fasermaterial 2 ein Rohr 40 bildet.

Anstelle eines Kernes 22 könnte sich im übrigen auch eine Vorform durch den Zuführring 31 erstrecken und zusammen mit den Fasern durch den Zuführring 31 hindurchbewegt werden, die auf diese Weise auf der Vorform aufgebracht werden könnten. Es versteht sich, daß unabhängig davon auch weitere Faserschichten vorher oder nachher auf die Vorform bzw. auf die bereits mit Fasern beschichtete Vorform aufgewickelt werden könnten.

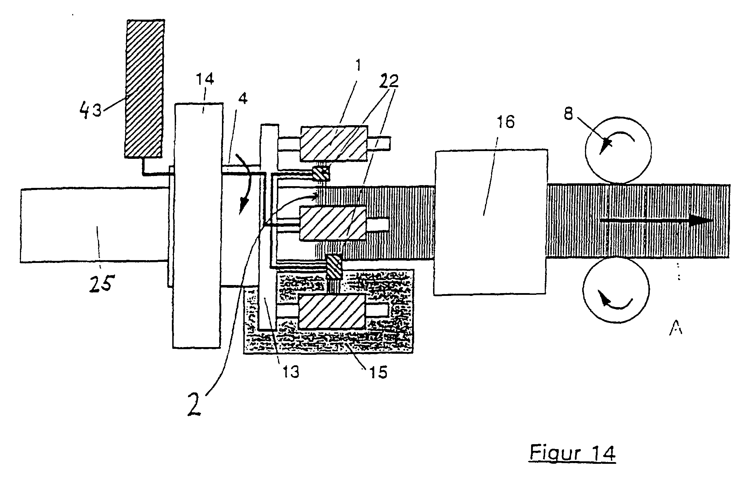

In Figur 14 ist eine Wickelvorrichtung für das Aufbringen einer Wicklung auf eine stab- oder zylinderförmige Vorform dargestellt. Die Vorform 25 wird entsprechend dem Pfeil A von links nach rechts durch die Vorrichtung hindurchbewegt. Dabei wird Fasermaterial 2, welches über Imprägniereinrichtungen 51 mit dem Imprägniermittel durchtränkt wird, auf die Vorform 25 aufgewickelt. Das Imprägniermittel wird aus einem Vorratsbeh älter oder Extruder 43 über eine Drehdurchführung 13 den einzelnen Imprägniereinrichtungen 51 zugeführt. Ein Drehantrieb 14 dreht die Drehdurchführung 13, die gleichzeitig als Halterung der drehbar aufgehängten Zuführungen 1 für das Fasermaterial 2 dient, um die Achse der Vorform 25 herum, die durch den Kalibrierring 36 gezogen werden kann. Die Kalibrierung kann mit entsprechender Heizung für eine Kalibrierung 36 benutzt werden, wobei durch eine entsprechende Kühlung auch eine Abkühlung auf Raumtemperatur erfolgen kann. Dies gilt insbesondere für thermoplastische Imprägniermittel. Fürduroplastische Imprägniermittel kann die Kalibrierung 36 fürdie Aushärtung des Imprägniermittels durch Wärme oder Strahlung genutzt werden.

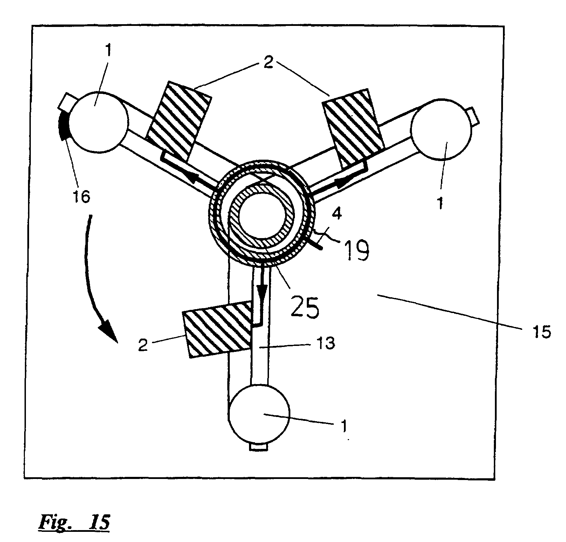

In Figur 15 ist dieselbe Einrichtung nochmals in einem Schnitt durch die Wickelvorrichtung in der Draufsicht von rechts zu erkennen. Man erkennt in der Mitte die Vorform 25 in Form eines Rohres, die axial, d.h. senkrecht zur Papierebene, durch eine rotierende Drehdurchführung 13 hindurchgeführt wird. Die Drehdurchführung 13 mit bevorratetem Fasermaterial 2 und Imprägniervorrichtung 51 drehen um die Vorform 25. Diese Einrichtung kann sich in einer beheizten Kammer 10 befinden.

Dabei wird das Imprägniermittel 4 über die Zuleitungen 24 in die Imprägniervorrichtungen 51 verteilt. Das Fasermaterial 2, das durch eine Spannvorrichtung 15 gebremst werden kann,um so ein Aufliegen des Fasermaterials 2 auf den porösen bzw. permeablen Teil 1 der Imprägniervorrichtung 51 zu gewährleisten.

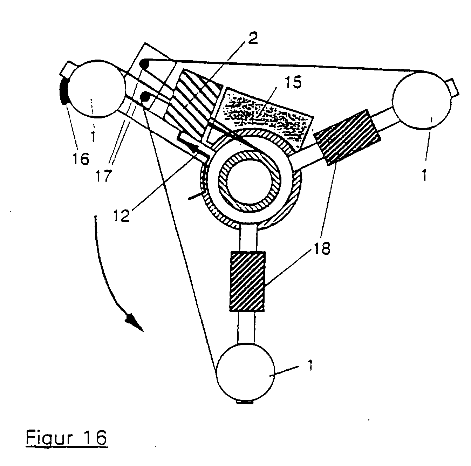

In Fig. 16 ist die Wickelvorrichtung nochmals in der Draufsicht zu erkennen, wobei im Gegensatz zu der Darsteflung in Fig. 15 nur eine Imprägniervorrichtung 51 vorliegt, wobei das Fasermaterial 2, das durch eine Spannvorrichtung 15 gebremst werden kann, und umgeleitet durch die Umlenkvorrichtungen 7, durch eine einzelne Imprägniervorrichtung 51 geführt wird. Dabei kann das beheizte Gehäuse 10 nur den Bereich abdecken, wo das imprägnierte Fasermaterial 2 auf den zu umwickelnden Körper trifft. Durch die Ausgleichsmasse 18 kann ein schnelles und gleichmäßiges Rotieren der Wickelvorrichtung gewährleistet werden.

### Bezugszeichenliste

- 1: poröser Imprägnierkörper
- 2: Fasermaterial
- 3: Kontaktoberflä che Imprägnierkörper
- 4: Imprägnierflüssigkeit
- 5: Umlenkrollen
- 5: Andrückschuh
- 6: Andrückwalze

- 1: zylindrischer Zuführkörper
- 2: Fasermaterialstrang
- 3: Ring aus porösem Material

- 7: Endflansche

- 1: Imprägnierringe oder -zylinder
- 7: Rolle bzw. Walze/Führungsrolle

- 10: Gehäuse

- 1: Zuführzylinder
- 3: Zuführkörper

- 8: Strahler

- 5: Vorform

- 1: Faserzuführeinrichtung
- 12: Imprägniereinrichtung
- 13: Imprägniermittel (Vorrat)
- 14: Leitung
- 16: Konsolidierunges- und/oder Formungswerkzeug
- 18: Zugvorrichtung
- 17: konsolidierter bzw. geformter Faserstrang
- 5: imprägnierter Faserstrang
- 6: Pultrusionswerkzeug
- 3: Zuführkörper

- 12: Kern
- 11: äußerer Zylinder
- 15: Strang
- 21: Zwischenraum
- 3: Vorratsbehälter f. Imprägniermittel

- 13: Drehdurchführung
- 14: Drehantrieb

## Patentansprüche

1. Verfahren zum Imprägnieren von Fasermaterial, wie zum Beispiel Faserbündeln, Fasersträngen, Geweben oder Fasermatten, bei welchem ein Imprägniermittel in die Zwischenräume des Fasermaterials eingebracht wird und die einzelnen Fasern umhüllt und/oder durchtränkt, wobei die Zufuhr des Imprägniermittels über Öffnungen in einem Zuführkörper erfolgt, **dadurch gekennzeichnet, daß** die Zufuhr über eine sehr große Anzahl kleiner Öffnungen großflächig erfolgt, indem für den Zuführkörper ein im wesentliches homogenes, poröses bzw. permeables Material verwendet wird, und das Fasermaterial während der Imprägnierung mit dem Zuführkörper in Kontakt gebracht wird.

2. Verfahren nach Anspruch 1, **dadurch gekennzeichnet, daß** der Durchströmungswiderstand des porösen bzw. permeablen Körpers (1) für das Imprägniermittel größer ist als der Durchströmungswiderstand durch das Fasermaterial (2) quer zu dessen Bewegungsrichtung.

3. Verfahren nach Anspruch 1 oder 2, **dadurch gekennzeichnet, daß** das Imprägniermittel auf der dem Fasermaterial abgewandten Seite des Zuführkörpers unter einem Überdruck von mindestens einem Bar zugeführt wird.

4. Verfahren nach einem der Ansprüche 1 bis 3, **dadurch gekennzeichnet, daß** die Relativgeschwindigkeit zwischen dem Fasermaterial (2) und dem porösen Zuführkörper (1) in Abhängigkeit von der Länge er Kontaktfläche zwischen Fasermaterial und Zuführkörper derart eingestellt wird, daß beim Hinweggleiten über den porösen Körper die Kontaktdauer eines beliebigen Punktes des Fasermaterials auf der Oberfläche bzw. dem Zuführbereich des porösen Körpers mindestens 10 Millisekunden beträgt.

5. Verfahren nach einem der Ansprüche 1 bis 4, **dadurch gekennzeichnet, daß** auf der dem Zuführkörper gegenüberliegenden Seite des Fasermaterials anhaftendes Imprägniermittel nach dem Passieren des Zuführkörpers abgestreift wird.

6. Verfahren nach einem der Ansprüche 1 bis 5, **dadurch gekennzeichnet, daß** ein duromeres Kunststoffmaterial als Imprägniermittel verwendet wird.

7. Verfahren nach einem der Ansprüche 1 bis 5, **dadurch gekennzeichnet, daß** ein thermoplastisches Kunststoffmaterial als Imprägniermittel verwendet wird.

8. Verfahren nach einem der Ansprüche 1 bis 7, **dadurch gekennzeichnet, daß** das Fasermaterial nach dem Imprägnieren auf eine Vorform aufgebracht wird.

9. Verfahren nach Anspruch 8, **dadurch gekennzeichnet, daß** als Vorform ein rohr- oder stabförmiges Element verwendet wird.

10. Verfahren nach Anspruch 9, **dadurch gekennzeichnet, daß** die Fasern im wesentlichen parallel zur Längsrichtung des rohr- oder stabförmigen Körpers auf diesen aufgebracht werden.

11. Verfahren nach Anspruch 9, **dadurch gekennzeichnet, daß** die Fasem unter einem Winkel von > 0 und maximal 90° zur Längsachse des rohr- oder stabförmigen Körpers auf diesen aufgewickelt werden.

12. Verfahren nach einem der Ansprüche 1 bis 11, **dadurch gekennzeichnet, daß** das Fasermaterial durch das Innere eines von außen mit dem Imprägniermittel beaufschlagten Hohlkörper und in Wandberührung mit diesem hindurchgeführt werden.

13. Verfahren nach Anspruch 12, **dadurch gekennzeichnet, daß** mehrere Imprägnierstufen hintereinander angeordnet sind und bereits imprägnierte Fasern aus einer ersten Imprägnierstufe innerhalb von Fasern geführt werden, die in einer zweiten oder weiteren Imprägnierstufe durch einen weiteren Hohlkörper hindurchgeführt und imprägniert werden.

14. Verfahren nach Anspruch 8 oder einem der auf Anspruch 8 rückbezogenen Ansprüche, **dadurch gekennzeichnet, daß** die Vorform ihrerseits aus einem imprägnierten und gegebenenfalls konsolidierten Fasermaterial besteht.

15. Verfahren nach Anspruch 8 oder einem der auf Anspruch 8 rückbezogenen Ansprüche, **dadurch gekennzeichnet, daß** die Vorform relativ zu einer stationären Wickelvorrichtung, durch welche imprägnierte Fasern zugeführt werden, gedreht wird.

16. Verfahren nach Anspruch 8 oder einem der auf Anspruch 8 rückbezogenen Ansprüche, **dadurch gekennzeichnet, daß** eine um die Vorform drehbar angeordnete Wickelvorrichtung verwendet wird.

17. Verfahren nach Anspruch 15 oder 16, **dadurch gekennzeichnet, daß** durch die Wickelvorrichtung mehrere Fasergruppen getrennt zugeführt werden.

18. Verfahren nach Anspruch 17, **dadurch gekennzeichnet, daß** die getrennten Fasergruppen eine gemeinsame Imprägniervorrichtung durchlaufen.

19. Verfahren nach Anspruch 17, **dadurch gekennzeichnet, daß** jede Fasergruppe eine speziell ihr zugeordnete Imprägniereinrichtung durchläuft.

20. Vorrichtung zum Imprägnieren von Fasermaterial, zum Beispiel Faserbündeln, Fasersträngen, Geweben oder Fasermatten, wobei die Vorrichtung einen Zuführkörper mit Öffnungen für die Zufuhr eines Imprägniermittels aufweist, weiterhin eine Transporteinrichtung aufweist, um das Fasermaterial durch die Vorrichtung bzw. an dem Zuführkörper vorbei zu bewegen, und Einrichtungen für die Zufuhr von Imprägniermittel zu dem Zuführkörper aufweist, **dadurch gekennzeichnet, daß** der Zuführkörper aus einem im wesentlichen homogenen, porösen Körper besteht, der für das Imprägniermittel durchlässig ist, wobei der poröse Körper dafür vorgesehen ist, daß die Oberfläche des porösen Körpers während der Imprägnierung mit dem Fasermaterial in Kontakt tritt.

21. Vorrichtung nach Anspruch 20, **dadurch gekennzeichnet, daß** der Strömungswiderstand des Zuführkörpers (1) für das Imprägniermittel größer ist als der Strömungswiderstand des Fasermaterials (2) senkrecht zu der Berührungsoberfläche des Zuführkörpers.

22. Vorrichtung nach Anspruch 20, **dadurch gekennzeichnet, daß** die Porenöffnungen im Mittel einen kleineren Durchmesser als 0,2 mm haben.

23. Vorrichtung nach einem der Ansprüche 20 bis 22, **dadurch gekennzeichnet, daß** die Länge des porösen Körpers in Bewegungsrichtung des Fasermaterials mindestens 5 mm beträgt.

24. Vorrichtung nach einem der Ansprüche 20 bis 23, **dadurch gekennzeichnet, daß** die Oberfläche des porösen Körpers als Oberfläche mit geringer Reibung für das Fasermaterial ausgebildet ist.

25. Vorrichtung nach Anspruch 24, **dadurch gekennzeichnet, daß** die Kontaktoberfläche des Zuführkörpers poliert ist.

26. Vorrichtung nach Anspruch 24 oder 25, **dadurch gekennzeichnet, daß** die Kontaktoberfläche des Zuführkörpers mit einem Gleitmaterial beschichtet, zum Beispiel galvanisiert ist.

27. Vorrichtung nach einem der Ansprüche 20 bis 26, **dadurch gekennzeichnet, daß** die Dicke des porösen Materials groß gegen die Dicke des Fasermaterials ist und vorzugsweise mindestens das Doppelte von dieser beträgt.

28. Vorrichtung nach einem der Ansprüche 20 bis 27, **dadurch gekennzeichnet, daß** ein von der Außenseite mit Imprägnierfluid beaufschlagbarer Hohlkörper vorgesehen ist.

29. Vorrichtung nach Anspruch 28, **dadurch gekennzeichnet, daß** der Hohlkörper in Faserlaufrichtung eine konvex gekrümmte Eintrittsöffnung aufweist.

30. Vorrichtung nach einem der Ansprüche 20 bis 29, **dadurch gekennzeichnet, daß** die Kontaktoberfläche des porösen Körpers konvex gekrümmt ist.

31. Vorrichtung nach Anspruch 20, **dadurch gekennzeichnet, daß** die Kontaktoberfläche des Zuführkörpers mindestens teilweise als Zylinderoberfläche ausgebildet ist.

32. Vorrichtung nach einem der Ansprüche 20 bis 31, **dadurch gekennzeichnet, daß** stromabwärts von dem Zuführkörper Abstreifeinrichtungen an einer oder beiden Seiten des Fasermaterials vorgesehen sind.

33. Vorrichtung nach einem der Ansprüche 20 bis 32, **dadurch gekennzeichnet, daß** der Zuführkörper bzw. dessen Kontaktfläche dafür ausgelegt ist, sich in Richtung des Fasermaterials mit einer Geschwindigkeit zu bewegen, die von der Bewegungsgeschwindigkeit des Fasermaterials abweicht.

34. Vorrichtung nach Anspruch 20, **dadurch gekennzeichnet, daß** der permeable Körper aus einem mehrschichtigen Gewebematerial besteht, wobei der Durchmesser der Öffnungen in den einzelnen Gewebeschichten bis zu 3 mm beträgt.

35. Vorrichtung nach einem der Ansprüche 20 bis 34, **dadurch gekennzeichnet, daß** sie eine Vorschubeinrichtung für eine relativ zu der Imprägniervorrichtung in Längsrichtung bewegbare Vorform aufweist, auf welche imprägnierte Fasern aufzubringen sind.

36. Vorrichtung nach Anspruch 35, **dadurch gekennzeichnet, daß** eine Rotationsvorrichtung für die Vorform vorgesehen ist, welche eine Drehung der Vorform relativ zu der Imprägniereinrichtung für die Fasern aufweist.

37. Vorrichtung nach Anspruch 35, **dadurch gekennzeichnet, daß** eine Imprägniereinrichtung gemeinsam mit einer Faserzuführeinrichtung drehbar um die Vorform angeordnet ist.

38. Vorrichtung nach Anspruch 37, **dadurch gekennzeichnet, daß** mehrere Faserzuführeinrichtungen unabhängig oder gemeinsam um eine Vorform drehbar vorgesehen sind.

39. Vorrichtung nach Anspruch 38, **dadurch gekennzeichnet, daß** die Faserzuführeinrichtungen je eine getrennte, mit der Faserzufuhreinrichtung drehbare Imprägniereinrichtung aufweisen.

40. Vorrichtung nach Anspruch 38, **dadurch gekennzeichnet, daß** die Faserzufuhreinrichtungen eine gemeinsame Imprägniereinrichtung aufweisen.

41. Vorrichtung nach einem der Ansprüche 38 bis 40, **dadurch gekennzeichnet, daß** die lmprägniereinrichtung(en) über mindestens eine Drehdurchführung mit dem Imprägnierfluid beaufschlagt werden.

42. Vorrichtung nach einem der Ansprüche 20 bis 41, **dadurch gekennzeichnet, daß** der poröse bzw. permeable Körper ein Verhältnis Länge zu Durchmesser der Fluidzuführkanäle aufweist, welches im Bereich von 0,1 bis 1000, vorzugsweise von 1 bis 1000, und insbesondere im Bereich von 10 bis 500 liegt.

## Claims

1. Method of impregnating fibre material such as for example fibre bundles, fibre strands, woven textiles or fibre mats, in which an impregnating agent is introduced into the intermediate spaces in the fibre material, and the individual fibres are encased and/or saturated, wherein the supply of the impregnating agent takes place by way of apertures in a supply body, **characterised in that** the supply takes place over a large area by way of a very large number of small apertures in so far a substantially homogeneous, porous or permeable material is used for the supply body and the fibre material is brought into contact with the supply body during the impregnation operation.

2. Method according to claim 1, **characterised in that** the through-flow resistance of the porous or permeable body (1) for the impregnating agent is greater than the through-flow resistance through the fibre material (2) transversely to its direction of movement.

3. Method according to claim 1 or claim 2, **characterised in that** the impregnating agent is supplied on the side of the supply body opposite the fibre material at an increased pressure of at least one bar.

4. Method according to one of claims 1 to 3, **characterised in that** the relative speed between the fibre material (2) and the porous supply body (1) is adjusted depending on the length of the contact surface between the fibre material and supply body such that, when sliding over the porous body, the duration of contact of any point of the fibre material on the surface or the supply region of the porous body is at least 10 milliseconds.

5. Method according to one of claims 1 to 4, **characterised in that** impregnating agent adhering to the side of the fibre material opposite the supply body is wiped off after passing the supply body.

6. Method according to one of claims 1 to 5, **characterised in that** a duromer plastics material is used as the impregnating agent.

7. Method according to one of claims 1 to 5, **characterised in that** a thermoplastic material is used as the impregnating agent.

8. Method according to one of claims 1 to 7, **characterised in that** after impregnation the fibre material is applied to a preform.

9. Method according to claim 8, **characterised in that** a tubular or rod-shaped element is used as the preform.

10. Method according to claim 9, **characterised in that** the fibres are applied to the tubular or rod-shaped body substantially parallel to the longitudinal direction thereof.

11. Method according to claim 9, **characterised in that** the fibres are wound onto the tubular or rod-shaped body at an angle of >0 and a maximum 90° to the longitudinal axis of the tubular or rod-shaped body.

12. Method according to one of claims 1 to 11, **characterised in that** the fibre material is conducted through the inside of a hollow body which is acted upon by the impregnating agent from the outside and in contact with the wall thereof.

13. Method according to claim 12, **characterised in that** a plurality of impregnating stages are arranged one after another, and fibres already impregnated are guided out of a first impregnating stage within fibres which, in a second or further impregnating stage, are conducted through a further hollow body and impregnated.

14. Method according to claim 8 or one of the claims appendant to claim 8, **characterised in that** in turn the preform is composed of an impregnated and optionally consolidated fibre material.

15. Method according to claim 8 or one of the claims appendant to claim 8, **characterised in that** the preform is rotated relative to a stationary winding device by means of which impregnated fibres are supplied.

16. Method according to claim 8 or one of the claims appendant to claim 8, **characterised in that** a winding device arranged to rotate around the preform is used.

17. Method according to claim 15 or 16, **characterised in that** a plurality of groups of fibres are supplied separately by means of the winding device.

18. Method according to claim 17, **characterised in that** the separated groups of fibres pass through a common impregnating apparatus.

19. Method according to claim 17, **characterised in that** each group of fibres passes through an impregnating device specially assigned to it.

20. Apparatus for impregnating fibre material, for example fibre bundles, fibre strands, woven textiles or fibre mats, wherein the apparatus has a supply body with apertures for the supply of an impregnating agent, and further has a transport device for moving the fibre material through the apparatus or the supply body respectively, and devices for supplying impregnating agent to the supply body, **characterised in that** the supply body comprises a substantially homogeneous, porous body which is permeable to the impregnating agent, wherein the porous body is provided for the surface of the porous body to come into contact with the fibre material during the impregnation operation.

21. Apparatus according to claim 20, **characterised in that** the flow resistance of the supply body (1) for the impregnating agent is greater than the flow resistance of the fibre material (2) perpendicularly to the contact surface of the supply body.

22. Apparatus according to claim 20, **characterised in that** the pore apertures in the centre are of a diameter smaller than 0.2 mm.

23. Apparatus according to one of claims 20 to 22, **characterised in that** the length of the porous body in the direction of movement of the fibre material is at least 5 mm.

24. Apparatus according to one of claims 20 to 23, **characterised in that** the surface of the porous body is in the form of a surface with low friction for the fibre material.

25. Apparatus according to claim 24, **characterised in that** the contact surface of the supply body is polished.

26. Apparatus according to claim 24 or 25, **characterised in that** the contact surface of the supply body is coated with a slip material, for example galvanised.

27. Apparatus according to one of claims 20 to 26, **characterised in that** the thickness of the porous material is large compared to the thickness of the fibre material and is preferably at least double it.

28. Apparatus according to one of claims 20 to 27, **characterised in that** there is provided a hollow body which can be acted upon by impregnating fluid from the outside .

29. Apparatus according to claim 28, **characterised in that** the hollow body has a convexly curved intake aperture in the direction in which the fibres move.

30. Apparatus according to one of claims 20 to 29, **characterised in that** the contact surface of the porous body is convexly curved.

31. Apparatus according to claim 20, **characterised in that** the contact surface of the supply body is at least in part in the form of a cylindrical surface.

32. Apparatus according to one of claims 20 to 31, **characterised in that** downstream of the supply body, wiping devices are provided on one or both sides of the fibre material.

33. Apparatus according to one of claims 20 to 32, **characterised in that** the supply body or its contact surface respectively is adapted to move in the direction of the fibre material at a speed which differs from the speed of movement of the fibre material.

34. Apparatus according to claim 20, **characterised in that** the permeable body comprises a multi-layered woven textile, wherein the diameter of the apertures in the individual layers of textile is up to 3 mm.

35. Apparatus according to one of claims 20 to 34, **characterised in that** it has an advance device for a preform moveable in the longitudinal direction relative to the impregnating apparatus, to which preform impregnated fibres are to be applied.

36. Apparatus according to claim 35, **characterised in that** there is provided a rotating device for the preform, which provides rotation of the preform relative to the impregnating device for the fibres.

37. Apparatus according to claim 35, **characterised in that** an impregnating device is arranged rotatably together with a fibre supply device about the preform.

38. Apparatus according to claim 37, **characterised in that** a plurality of fibre supply devices are provided to be rotatably independently or together about a preform.

39. Apparatus according to claim 38, **characterised in that** the fibre supply devices each have a separate impregnating device rotatable with the fibre supply device.

40. Apparatus according to claim 38, **characterised in that** the fibre supply devices have a common impregnating device.

41. Apparatus according to one of claims 38 to 40, **characterised in that** the impregnating fluid is applied to the impregnating apparatus(es) by means of at least one rotary transmission.

42. Apparatus according to one of claims 20 to 41, **characterised in that** the porous or permeable body has a ratio of length to diameter of the fluid supply passages which is in the range of 0.1 to 1000, preferably 1 to 1000, and in particular in the range of 10 to 500.

## Revendications

1. Procédé d'imprégnation d'une matière fibreuse, comme par exemple des faisceaux de fibres, des écheveaux de fibres, des tissus ou des mats de fibres, dans lequel un agent d'imprégnation est introduit dans les espaces intermédiaires de la matière fibreuse et enrobe et/ou imprègnent les fibres individuelles, l'amenée de l'agent d'imprégnation étant effectuée par des ouvertures ménagées dans un corps d'amenée, **caractérisé en ce que** l'amenée est effectuée sur une grande surface par un très grand nombre de petites ouvertures en utilisant pour le corps d'amenée une matière poreuse resp. perméable sensiblement homogène et en mettant en contact la matière fibreuse avec le corps d'amenée pendant l'imprégnation.

2. Procédé selon la revendication 1, **caractérisé en ce que** la résistance à l'écoulement du corps poreux resp. perméable (1) destiné à l'agent d'imprégnation est supérieure à la résistance d'écoulement à travers la matière fibreuse (2) transversalement à la direction de déplacement de celle-ci.

3. Procédé selon la revendication 1 ou 2, **caractérisé en ce que** l'agent d'imprégnation est amené avec une surpression d'au moins un bar du côté du corps d'amenée qui est opposé à la matière fibreuse.

4. Procédé selon l'une des revendications 1 à 3, **caractérisé en ce que** la vitesse relative entre la matière fibreuse (2) et le corps d'amenée poreux (1) est réglée en fonction de la longueur de la surface de contact entre la matière fibreuse et le corps d'amenée de sorte que, lors du glissement sur le corps poreux, la durée de contact d'un point quelconque de la matière fibreuse sur la surface resp. la zone d'amenée du corps poreux est au moins de 10 millisecondes.

5. Procédé selon l'une des revendications 1 à 4, **caractérisé en ce qu'**un agent d'imprégnation adhérent est raclé après le passage du corps d'amenée du côté de la matière fibreuse qui est opposé au corps d'amenée.

6. Procédé selon l'une des revendications 1 à 5, **caractérisé en ce qu'**une matière plastique duromère est utilisée comme agent d'imprégnation.

7. Procédé selon l'une des revendications 1 à 5, **caractérisé en ce qu'**une matière thermoplastique est utilisée comme agent d'imprégnation.

8. Procédé selon l'une des revendications 1 à 7, **caractérisé en ce que** la matière fibreuse est appliquée sur une préforme après l'imprégnation.

9. Procédé selon la revendication 8, **caractérisé en ce qu'**un élément tubulaire ou en forme de barre est utilisé comme préforme.

10. Procédé selon la revendication 9, **caractérisé en ce que** les fibres sont appliquées sur le corps tubulaire ou en forme de barre sensiblement parallèlement à la direction longitudinale dudit corps.

11. Procédé selon la revendication 9, **caractérisé en ce que** les fibres sont enroulées sur le corps tubulaire ou en forme de barre avec un angle supérieur à 0° et au maximum de 90° par rapport à l'axe longitudinal dudit corps.

12. Procédé selon l'une des revendications 1 à 11, **caractérisé en ce que** la matière fibreuse est guidée à l'intérieur d'un corps creux exposé de l'extérieur à l'agent d'imprégnation et en étant en contact avec les parois dudit corps creux.

13. Procédé selon la revendication 12, **caractérisé en ce qu'**il est prévu plusieurs étapes d'imprégnation successives et **en ce que** l'on fait passer des fibres déjà imprégnées par une première étape d'imprégnation à l'intérieur de fibres que l'on fait passer dans un autre corps creux à une deuxième étape d'imprégnation ou une étape d'imprégnation ultérieure et qui sont imprégnées.

14. Procédé selon la revendication 8 ou l'une des revendications se référant à la revendication 8, **caractérisé en ce que** la préforme est constituée de son côté d'une matière fibreuse imprégnée et le cas échéant consolidée.

15. Procédé selon la revendication 8 ou l'une des revendications se référant à la revendication 8, **caractérisé en ce que** l'on fait tourner la préforme par rapport à un dispositif d'enroulement immobile permettant d'amener des fibres imprégnées.

16. Procédé selon la revendication 8 ou l'une des revendications se référant la revendication 8, **caractérisé en ce que** l'on utilise un dispositif d'enroulement placé de manière à pouvoir tourner autour de la préforme.

17. Procédé selon la revendication 15 ou 16, **caractérisé en ce que** plusieurs groupes de fibres sont amenés séparément à travers le dispositif d'enroulement.

18. Procédé selon la revendication 17, **caractérisé en ce que** les groupes de fibres séparés passent à travers un dispositif d'imprégnation commun.

19. Procédé selon la revendication 17, **caractérisé en ce que** chaque groupe de fibres passe à travers un dispositif d'imprégnation qui lui est spécialement associé.

20. Dispositif d'imprégnation d'une matière fibreuse, par exemple des faisceaux de fibres, des écheveaux de fibres, des tissus ou des mats de fibres, le dispositif comportant un corps d'amenée doté d'ouvertures destinées à amener un agent d'imprégnation, et comportant en outre un dispositif de transport destiné à déplacer la matière fibreuse à travers le dispositif resp. devant le corps d'amenée, et des dispositifs d'amenée d'agent d'imprégnation au corps d'amenée, **caractérisé en ce que** le corps d'amenée est constitué d'un corps poreux sensiblement homogène qui laisse passer l'agent d'imprégnation, le corps poreux étant destiné à mettre en contact la surface du corps poreux avec la matière fibreuse pendant l'imprégnation.

21. Dispositif selon la revendication 20, **caractérisé en ce que** la résistance à l'écoulement du corps (1) d'amenée de l'agent d'imprégnation est supérieure à la résistance d'écoulement de la matière fibreuse (2) perpendiculairement à la surface de contact du corps d'amenée.

22. Dispositif selon la revendication 20, **caractérisé en ce que** les ouvertures des pores ont au milieu un diamètre inférieur à 0,2 mm.

23. Dispositif selon l'une des revendications 20 à 22, **caractérisé en ce que** la longueur du corps poreux dans la direction de déplacement de la matière fibreuse est au moins égale à 5 mm.

24. Dispositif selon l'une des revendications 20 à 23, **caractérisé en ce que** la surface du corps poreux est conformée en surface de faible friction vis-à-vis de la matière fibreuse.

25. Dispositif selon la revendication 24, **caractérisé en ce que** la surface de contact du corps d'amenée est polie.

26. Dispositif selon la revendication 24 ou 25, **caractérisé en ce que** la surface de contact du corps d'amenée est recouverte d'une matière favorisant le glissement, par exemple par galvanisation.

27. Dispositif selon l'une des revendications 20 à 26, **caractérisé en ce que** l'épaisseur de la matière poreuse est importante par rapport à l'épaisseur de la matière fibreuse et est avantageusement le double de celle-ci.

28. Dispositif selon l'une des revendications 20 à 27, **caractérisé en ce qu'**il est prévu un corps creux qui peut être exposé du côté extérieur à un fluide d'imprégnation.

29. Dispositif selon la revendication 28, **caractérisé en ce que** le corps creux comporte, dans la direction de défilement des fibres, une ouverture d'entrée incurvée convexe.

30. Dispositif selon l'une des revendications 20 à 29, **caractérisé en ce que** la surface de contact du corps poreux est incurvée convexe.

31. Dispositif selon la revendication 20, **caractérisée en ce que** la surface de contact du corps d'amenée est conformée au moins partiellement en surface de cylindre.

32. Dispositif selon l'une des revendications 20 à 31, **caractérisé en ce qu'**il est prévu en amont du corps d'amenée des dispositifs de raclage sur un côté ou des deux côtés de la matière fibreuse.

33. Dispositif selon l'une des revendications 20 à 32, **caractérisé en ce que** le corps d'amenée resp. sa surface de contact a été étudié pour se déplacer en direction de la matière fibreuse à une vitesse qui est différente de la vitesse de déplacement de la matière fibreuse.

34. Dispositif selon la revendication 20, **caractérisé en ce que** le corps perméable est en une matière tissée de plusieurs couches, le diamètre des ouvertures ménagées dans les couches de tissu individuelles pouvant atteindre 3 mm.

35. Dispositif sur l'une des revendications 20 à 34, **caractérisé en ce qu'**il comporte un dispositif d'avancement d'une préforme qui est mobile dans la direction longitudinale par rapport au dispositif d'imprégnation et sur laquelle doivent être appliquées des fibres imprégnées.

36. Dispositif selon la revendication 35, **caractérisé en ce qu'**il est prévu un dispositif de mise en rotation de la préforme qui fait tourner la préforme par rapport au dispositif d'imprégnation des fibres.

37. Dispositif selon la revendication 35, **caractérisée en ce qu'**un dispositif d'imprégnation est agencé de façon à pouvoir tourner autour de la préforme de conserve avec un dispositif d'amenée de fibres.

38. Dispositif selon la revendication 37, **caractérisé en ce qu'**il est prévu plusieurs dispositifs d'amenée de fibres aptes à tourner autour d'une préforme de conserve ou indépendamment l'un de l'autre.

39. Dispositif selon la revendication 38, **caractérisé en ce que** chacun des dispositifs d'amenée de fibres comporte un dispositif d'imprégnation séparé apte à tourner de conserve avec le dispositif d'amenée de fibres.

40. Dispositif selon la revendication 38, **caractérisé en ce que** les dispositifs d'amenée de fibres comportent un dispositif d'imprégnation commun.

41. Dispositif selon l'une des revendications 38 à 40, **caractérisé en ce que** le dispositif ou les dispositifs d'imprégnation sont exposés au fluide imprégnation sur au moins une révolution.

42. Dispositif selon l'une des revendications 20 à 41, **caractérisé en ce que** le corps poreux resp. perméable a un rapport de sa longueur au diamètre des canaux d'amenée de fluide qui est de l'ordre de 0,1 à 1000, avantageusement de 1 à 1000 et en particulier de l'ordre de 10 à 500.
